# EUROPEAN PATENT APPLICATION

(11) **EP 4 790 790 A1**
(43) Date of publication of application: **12.08.2026**
(21) Application number: 24874577.0
(22) Date of filing: 30.09.2024
(51) Int. Cl.: H01M 10/54, C01G 53/00, C22B 3/06, C22B 3/26, C22B 3/44, C22B 7/00, C22B 23/00

(54) **METHOD FOR PRODUCING PRECURSOR OF LITHIUM ION BATTERY POSITIVE ELECTRODE ACTIVE MATERIAL, AND METHOD FOR PRODUCING LITHIUM ION BATTERY POSITIVE ELECTRODE ACTIVE MATERIAL**

(30) Priority: 02.10.2023 JP 2023171607
(71) Applicant: JX Metals Circular Solutions Co., Ltd., Tokyo 105-8417 (JP)
(72) Inventor: MUSASHI,Yuma, Hitachi-shi, Ibaraki 317-0056 (JP); KAWAHASHI,Yasuhiro, Hitachi-shi, Ibaraki 317-0056 (JP)
(74) Representative: Arnold & Siedsma
(86) International application number: PCT/JP2024/034988
(87) International publication number: WO 2025/074975

(57) **Abstract**

A method for producing a precursor of a lithium ion battery cathode active material from lithium ion battery waste includes: an acid leaching step of leaching metals in battery powder obtained from lithium ion battery waste with an acid to obtain a metal-containing solution containing cobalt ions and/or nickel ions; a cobalt extraction step of extracting cobalt ions from the metal-containing solution containing cobalt ions by solvent extraction to obtain a cobalt-containing solution containing sodium ions, and/or a nickel extraction step of extracting nickel ions from the metal-containing solution containing nickel ions by solvent extraction to obtain a nickel-containing solution containing sodium ions; a mixing step of preparing a mixed solution containing cobalt ions and/or nickel ions and sodium ions using the cobalt-containing solution and/or the nickel-containing solution; a coprecipitation step of using sodium hydroxide and/or sodium carbonate as a pH adjusting agent and adding a complexing agent to the mixed solution to obtain a composite salt containing cobalt and/or nickel by coprecipitation reaction; and a washing step of washing the composite salt to obtain a precursor.

## Description

### [Technical Field]

This specification describes a method for producing a precursor of lithium ion battery cathode active material from lithium ion battery waste and a method for producing a lithium ion battery cathode active material using the resulting precursor.

### [Background Art]

In order to recover valuable metals from lithium ion battery waste, for example, a wet process may be applied to battery powder obtained through roasting or other predetermined dry preprocessing of lithium ion battery waste (see, for example, Patent Literature 1).

In the wet process, metals such as cobalt, nickel, manganese, lithium, aluminum, and iron in the battery powder are leached with an acid to obtain a metal-containing solution containing the dissolved metals. Next, aluminum and iron are removed from the metal-containing solution by neutralization if necessary, and aluminum, manganese, cobalt, nickel, and the like dissolved in the metal-containing solution are then separated from the metal-containing solution by solvent extraction. Cobalt-containing and nickel-containing solutions obtained by separating cobalt and nickel from metal-containing solutions, respectively, may be subjected to a crystallization process and recovered as cobalt or nickel salts, respectively. Lithium is then recovered from the lithium-containing solution in which lithium remains dissolved.

### [Citation List]

### [Patent Literature]

[PTL 1] WO 2018/181816 A1

### [Summary of Invention]

### [Technical Problem]

By the way, when cobalt and/or nickel recovered from lithium ion battery waste as described above is used to produce a precursor of lithium ion battery cathode active material, it is conceivable to dissolve the above cobalt salt and/or nickel salt in a liquid, mix manganese or other metals therein, and then apply the so-called coprecipitation method to the mixed solution. However, this method is not a simple step because the cobalt salt and nickel salt, once precipitated by the crystallization process after solvent extraction, are dissolved again.

To address this problem, if the crystallization process is omitted and the cobalt-containing solution and/or nickel-containing solution obtained by solvent extraction is used directly for preparing the mixed solution, the steps can be simplified, but sodium which has been removed by the crystallization process is brought in the mixed solution. A pH adjusting agent is used during coprecipitation by the coprecipitation method, and in the precursor thus obtained, both a substance derived from the pH adjusting agent and sodium brought in from the cobalt-containing solution and/or the nickel-containing solution are regarded as impurities.

This specification provides a method for producing a precursor of a lithium ion battery cathode active material and a method for producing a lithium ion battery cathode active material that can produce a precursor from lithium ion battery waste with reduced contamination of impurities other than sodium while making the steps somewhat simplified.

### [Solution to Problem]

The method for producing a precursor of a lithium ion battery cathode active material described in this specification is a method for producing a precursor of a lithium ion battery cathode active material from lithium ion battery waste, the method comprising: an acid leaching step of leaching metals in battery powder obtained from lithium ion battery waste with an acid to obtain a metal-containing solution containing cobalt ions and/or nickel ions; a cobalt extraction step of extracting cobalt ions from the metal-containing solution containing cobalt ions by solvent extraction to obtain a cobalt-containing solution containing sodium ions, and/or a nickel extraction step of extracting nickel ions from the metal-containing solution containing nickel ions by solvent extraction to obtain a nickel-containing solution containing sodium ions; a mixing step of preparing a mixed solution containing cobalt ions and/or nickel ions and sodium ions using the cobalt-containing solution and/or nickel-containing solution; a coprecipitation step of using sodium hydroxide and/or sodium carbonate as a pH adjusting agent and adding a complexing agent to the mixed solution to obtain a composite salt containing cobalt and/or nickel by coprecipitation reaction; and a washing step of washing the composite salt to obtain a precursor.

One method for producing a lithium ion battery cathode active material described in this specification is a method for producing a lithium ion battery cathode active material using a precursor produced by the above-described method for producing a precursor of a lithium ion battery cathode active material, the method comprising: a lithium salt preparation step of obtaining a lithium salt from at least a portion of a lithium-containing solution obtained after the cobalt extraction step and/or nickel extraction step; and a calcining step of mixing the precursor obtained in the coprecipitation step with the lithium salt obtained in the lithium salt preparation step, and heating and calcining the resulting mixture.

### [Advantageous Effects of Invention]

According to the method for producing a precursor of lithium ion battery cathode active material described above, it is possible to produce a precursor from lithium ion battery waste with reduced contamination of impurities other than sodium, as compared to the case where the pH adjusting agent other than sodium hydroxide and sodium carbonate is used, while simplifying the steps to some extent.

### [Brief Description of Drawings]

[Fig. 1] Fig. 1 is a flow chart showing first-stage steps in a method for producing a precursor of a lithium ion battery cathode active material according to an embodiment of this invention.
[Fig. 2] Fig. 2 is a flow chart showing subsequent steps following Fig. 1.
[Fig. 3] Fig. 3 is a flow chart showing an example of a preprocessing step for obtaining battery powder from lithium ion battery waste.
[Fig. 4] Fig. 4 is a flow chart showing an example of processes that can be performed on a cobalt-containing solution.
[Fig. 5] Fig. 5 is a flow chart showing an example of processes that can be performed on a nickel-containing solution.
[Fig. 6] Fig. 6 is a flow chart showing a method for producing a lithium ion battery cathode active material from a precursor.

### [Description of Embodiments]

Embodiments of the present invention will be described in detail below.

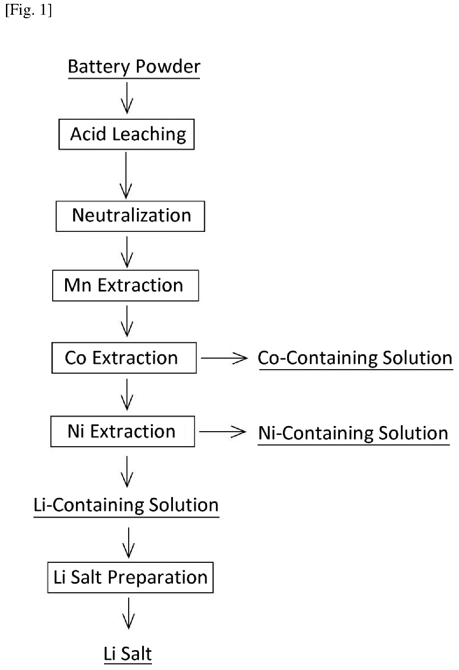

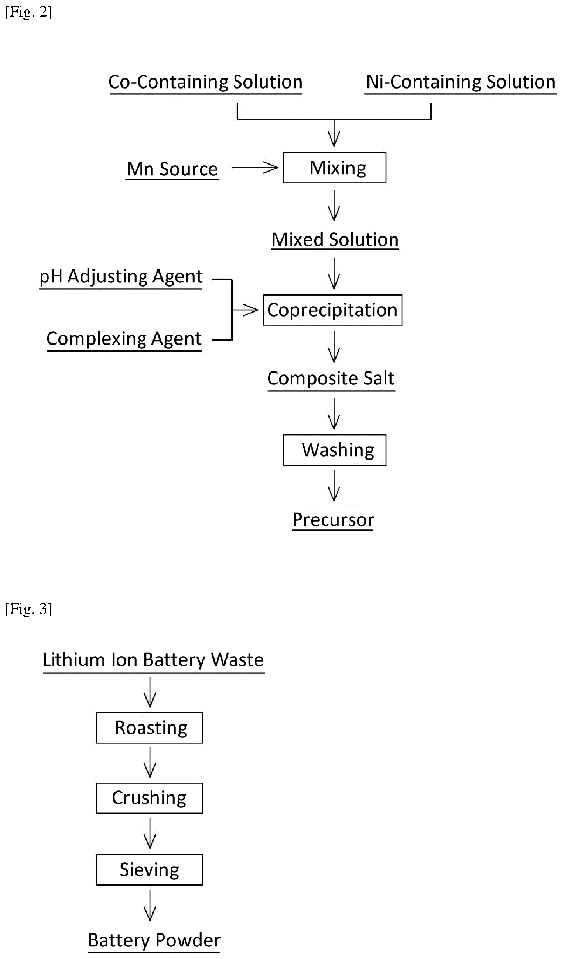

A method for producing a precursor of a lithium ion battery cathode active material (hereinafter simply referred to as "cathode active material") according to an embodiment is a method for producing a precursor of the cathode active material from lithium ion battery waste, and as shown in Figs. 1 and 2, includes an acid leaching step, a neutralization step, a manganese extraction step, a cobalt extraction step, a nickel extraction step, a mixing step, a coprecipitation step, and a washing step.

In the acid leaching step, metals in the battery powder obtained from lithium ion battery waste are leached with an acid to obtain a metal-containing solution containing cobalt ions and/or nickel ions. In the cobalt extraction step, cobalt ions are extracted from a metal-containing solution containing cobalt ions by solvent extraction to obtain a cobalt-containing solution. In the nickel extraction step, nickel ions are extracted from a metal-containing solution containing nickel ions by solvent extraction to obtain a nickel-containing solution. After the acid leaching step and before the cobalt extraction step or nickel extraction step, a neutralization step and a manganese extraction step described below may be performed as necessary, but the neutralization step and/or the manganese extraction step may be omitted. When both cobalt extraction step and nickel extraction step are performed, each of the cobalt-containing solution and nickel-containing solution can be used in the mixing step, as shown in Fig. 2. If only at least one of the cobalt extraction step or the nickel extraction step is performed, only one of the resulting cobalt-containing solution or nickel-containing solution can be used in the mixing step.

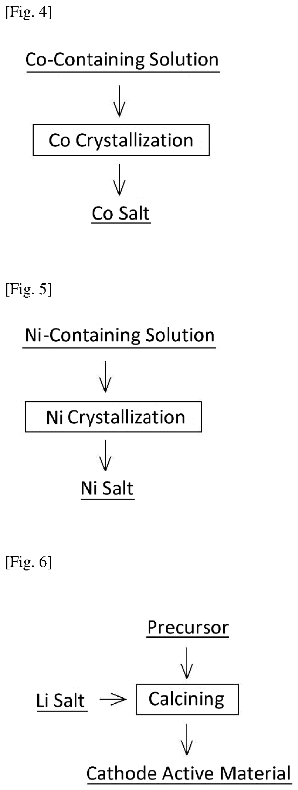

In the mixing step, a cobalt-containing solution and/or a nickel-containing solution is used to prepare a mixed solution containing cobalt ions and/or nickel ions. Then, in the coprecipitation step, a pH adjusting agent and a complexing agent are added to the mixed solution to produce a composite salt containing cobalt and/or nickel by coprecipitation reaction. The mixed solution may further contain manganese ions, in which case the composite salt will further contain manganese. Here, the steps are expected to be simplified because the cobalt-containing solution and/or nickel-containing solution are used directly in the mixing step to prepare the mixed solution without a crystallization process of precipitating a cobalt salt from the cobalt-containing solution or a crystallization process of precipitating a nickel salt from the nickel-containing solution. However, it is possible to perform the cobalt crystallization step or the nickel crystallization step on at least a portion of the remainder of the cobalt-containing solution or the nickel-containing solution (see Figs. 4 and 5) and use or sell the resulting cobalt salt or nickel salt for uses other than production of precursors.

By the way, the battery powder may contain sodium. This sodium is leached in the acid leaching step and included in the metal-containing solution, and may not be completely separated after the neutralization step and/or manganese extraction step and may be extracted with cobalt or nickel in the cobalt extraction step or the nickel extraction step. In addition, sodium may be mixed in due to sodium hydroxide added as a pH adjusting agent in the neutralization step and each extraction step. At this time, the above cobalt-containing solution and nickel-containing solution contain sodium ions. When the mixing step is performed using such cobalt-containing solution and/or nickel-containing solution, the mixed solution obtained in the mixing step will contain the above sodium ions brought in. In contrast, in this embodiment, sodium hydroxide and/or sodium carbonate is used as a pH adjusting agent in the coprecipitation step. In this case, the main impurity in the composite salt obtained in the coprecipitation step is sodium, and contamination of other substances that would otherwise occur when other pH adjusting agents are used does not occur. Also, here, since sodium mainly adheres to the particle surfaces or the like of the composite salt, it can be effectively removed by performing the subsequent washing step. As a result, a precursor with a relatively low impurity content can be produced.

It should be noted that the battery powder used in the flow chart of Fig. 1 is obtained from lithium ion battery waste. In more detail, the battery powder may be obtained by subjecting lithium ion battery waste to preprocessing steps such as roasting, crushing, and sieving, as illustrated in Fig. 3. Although the details of each step will be described herein according to Figs. 1 to 3, Figs. 1 to 3 are merely illustrative, and are not limited to such specific flows.

### (Lithium Ion Battery Waste)

The lithium ion battery waste of interest refers to lithium ion batteries which can be used in various electronic devices such as mobile phones and which have been discarded due to the end of the battery product's life, manufacturing defects, or other reasons. The recovery of valuable metals from such lithium ion battery waste is preferred in terms of effective utilization of resources. The lithium ion battery waste refers to lithium ion batteries to be recycled, regardless of whether the lithium ion batteries are traded for value, free of charge, or treated as industrial waste.

The lithium ion battery waste has a housing containing aluminum as an exterior that wraps around the lithium ion battery. Examples of the housing include those made only of aluminum and those containing aluminum, iron, aluminum laminate, and the like. The lithium ion battery waste may also contain, in the above housing, cathode active materials composed of one single metal oxide containing lithium and one selected from the group consisting of nickel, cobalt and manganese, or a composite metal oxides containing lithium and two or more of those metals, or the like, and aluminum foils (cathode substrates) to which the cathode active materials are applied and fixed by, for example, polyvinylidene fluoride (PVDF) or other organic binders. In addition, the lithium ion battery waste may also contain copper, iron, or the like. Further, the housing of the lithium ion battery waste typically contains an electrolytic solution having an electrolyte such as lithium hexafluorophosphate dissolved in an organic solvent. As the organic solvent, ethylene carbonate, diethyl carbonate or the like may be used, for example.

### (Preprocessing Step)

In many cases, the lithium ion battery waste is subjected to preprocessing step as a dry process, a part of which may include a wet process. In the preprocessing step, at least one of roasting, crushing and sieving can be performed. The lithium ion battery waste becomes battery powder through the preprocessing step. The roasting, crushing, and sieving in the preprocessing step may optionally be performed, respectively, or they may be performed in any order. The battery powder means the powder obtained by subjecting the lithium ion battery waste to any preprocessing to separate and concentrate cathode material components. The battery powder may be obtained as a powder by crushing and sieving the lithium ion battery waste with or without a heat treatment to concentrate the cathode material components.

In the roasting, the above lithium ion battery waste is heated. When the roasting is carried out, metals such as lithium and cobalt contained in the lithium ion battery waste is changed to an easily dissolvable form. During the roasting, the lithium ion battery waste is heated, and for example, preferably maintained in a temperature range of, for example, from 450°C to 1000°C, preferably in a temperature range of from 600°C to 800°C, for 0.5 to 4 hours. In the roasting, one of the heating in an air atmosphere or the heating in an inert atmosphere such as nitrogen can be carried out, as well as both the heating in the air atmosphere and the heating in the inert atmosphere may be carried out in this order or opposite order. The roasting can be of batch type or continuous type. For example, the batch type includes a stationary furnace, the continuous type includes a rotary kiln furnace, and other various types of furnaces can also be used.

During the roasting, at least a part of the electrolytic solution is removed from the lithium ion battery waste because the electrolytic solution is evaporated, or the like. In many cases, when the lithium ion battery waste is heated during the roasting, the components of the internal electrolytic solution are sequentially evaporated, starting with the component having a lower boiling point. When the roasting is carried out, the electrolytic solution is removed and rendered harmless, and the organic binder is decomposed to promote separation between the aluminum foil and the cathode active material during crushing and sieving, which will be described below. Although the composition of the cathode active material changes due to roasting, the roasted material is also referred to as the cathode active material, for convenience.

After the roasting, the crushing can be carried out to remove cathode active materials and the like from the housing of the lithium ion battery waste. The crushing selectively separates the cathode active materials from the aluminum foils to which the cathode active materials are applied, while destroying the housings of the lithium ion battery waste.

Various known apparatuses or devices can be used in the crushing. In particular, it is preferable to use an impact-type crusher that can crush lithium ion battery waste by applying an impact while cutting it. Examples of the impact-type crusher include a sample mill, a hammer mill, a pin mill, a wing mill, a tornado mill, and a hammer crusher. It should be noted that a screen can be installed at an outlet of the crusher, whereby the lithium ion battery waste is discharged from the crusher through the screen when crushed to a size that can pass through the screen.

After crushing the lithium ion battery waste, the sieving is performed by sieving it using a sieve having appropriate openings. Thus, aluminum or copper remains on the sieve, and the battery powder that has removed aluminum or copper to some extent can be obtained under the sieve.

The battery powder obtained in the preprocessing step contains nickel, cobalt, lithium, manganese, and the like. For example, a content of cobalt in the battery powder is 1% to 30% by mass, a content of nickel is 1% to 30% by mass, a content of lithium is 2% to 8% by mass, a content of manganese is 1% to 30% by mass, although not limited thereto. The battery powder may further contain 1% to 10% by mass of aluminum, 1% to 5% by mass of iron, 1% to 10% by mass of copper, and 0.001% by mass to 0.1% by mass of sodium.

### (Acid Leaching Step)

In the acid leaching step, the metals in the battery powder are leached with an acid using an acidic leaching solution such as sulfuric acid. As a result, the metals in the battery powder are dissolved to obtain a solution that has dissolved the metals in the battery powder, and a leached residue that has remained undissolved. As used herein, the solution in which the metals in the battery powder are dissolved in each step from the end of leaching in the acid leaching step to the nickel extraction step as described below is also referred to as a metal-containing solution.

In the acid leaching step, the pH of the acidic leaching solution or leached solution may be, for example, less than 3.5. Moreover, an oxidation-reduction potential (ORP value, based on silver/silver chloride potential) may be 100 mV or less. After leaching, solid-liquid separation may be performed to separate the leached residue from the metal-containing solution, but the solid-liquid separation may not be performed and the metal-containing solution containing the leached residue may be subjected to the next neutralization step. As a diluent for adjusting the pH of the acidic leaching solution, an extracted solution (a lithium-containing solution such as a lithium sulfate solution) in a nickel extraction step as described below or water can be used. Thus, the lithium ions are circulated in a series of steps in the wet process, and the lithium ions in the solution can be concentrated in the steps.

The metal-containing solution obtained in the acid leaching step may have, for example, a cobalt ion concentration of 5 g/L to 50 g/L, a nickel ion concentration of 10 g/L to 50 g/L, a lithium ion concentration of 2 g/L to 10 g/L, a manganese ion concentration of 0 g/L to 50 g/L, an aluminum ion concentration of 1.0 g/L to 20 g/L, an iron ion concentration of 0.1 g/L to 5.0 g/L, a copper ion concentration of 0.005 g/L to 0.2 g/L, and a sodium ion concentration of 0.001 g/L to 0.1 g/L.

### (Neutralization Step)

When the metal-containing solution obtained in the acid leaching step contains aluminum ions and/or iron ions, a neutralization step can be performed after the acid leaching step. In the neutralization step, the pH of the metal-containing solution is increased to precipitate aluminum ions and/or iron ions as solids, and the precipitate is separated. When the metal-containing solution contains aluminum ions and iron ions, it is preferable that the neutralization step includes an aluminum removal stage and an iron removal stage. However, if the metal-containing solution does not contain aluminum ions and/or iron ions, the aluminum removal step and/or iron removal step may be omitted.

In the aluminum removal step, the pH of the metal-containing solution is increased to precipitate at least a part of the aluminum ions and remove them by solid-liquid separation. At this time, for example, when the pH is increased in the range of 4.0 to 5.0 with a pH adjusting agent at a solution temperature of 50°C to 90°C, the aluminum ions can be effectively separated while suppressing precipitation of nickel ions and/or cobalt ions.

In the iron removal step, an oxidizing agent is added and a pH adjusting agent is further added to increase the pH in a range of 4.0 to 5.0. As a result, the iron ions are oxidized from divalent to trivalent, and precipitated as a solid such as an oxide or iron hydroxide (Fe(OH)3), which can be removed by solid-liquid separation. An oxidation-reduction potential (ORP value, based on silver/silver chloride potential) during oxidation is preferably 300 mV to 900 mV. The oxidizing agent is not particularly limited as long as it can oxidize iron ions, but it may preferably be manganese dioxide, a cathode active material, and/or a manganese-containing leached residue obtained by leaching a cathode active material. The manganese-containing leached residue obtained by leaching the cathode active material with the acid may include manganese dioxide. When the cathode active material or the like is used as the oxidizing agent, it causes a precipitation reaction which converts manganese ions in the liquid to manganese dioxide, so that the precipitated manganese can be removed together with iron.

Examples of the pH adjusting agent used in neutralization in the above aluminum removal stage and iron removal stage include lithium hydroxide, sodium hydroxide, sodium carbonate, and ammonia, in the form of a solid or liquid. Among them, lithium hydroxide is preferable because it is possible to prevent sodium and the like from being mixed into lithium hydroxide recovered in a hydroxide step as described below. For the pH adjusting agent, a lithium hydroxide solution obtained by performing a hydroxide process on the lithium-containing solution after the nickel extraction step described later can be used, whereby lithium ions are circulated within the series of steps.

### (Manganese Extraction Step)

The metal-containing solution can be subjected to a solvent extraction method to extract and remove manganese ions in the manganese extraction step, after undergoing the above neutralization step if necessary. Here, when aluminum ions remain in the metal-containing solution, not only manganese ions but also aluminum ions are extracted and removed. However, the manganese extraction step may be omitted.

In the extraction of the manganese ions, an extracting agent containing a phosphate ester-based extracting agent is preferably used. Specific examples of the phosphate ester-based extracting agent include di-2-ethylhexyl phosphate (abbreviated name: D2EHPA, for example, trade name: DP8R). Further, the extracting agent may be a mixture of the phosphate ester-based extracting agent and an oxime-based extracting agent. In this case, the oxime-based extracting agent is preferably aldoxime or based on aldoxime. Specific examples include 2-hydroxy-5-nonylacetophenone oxime (trade name: LIX84), 5-dodecyl salicylaldoxime (trade name: LIX860), a mixture of LIX84 and LIX860 (trade name: LIX984), 5-nonyl salicylaldoxime (trade name: ACORGAM5640) and the like.

The extracting agent may be diluted with an aromatic, paraffinic, naphthenic, or other hydrocarbon-based organic solvent to a concentration of 10% to 30% by volume and used as a solvent.

During extraction, an equilibrium pH is preferably 2.3 to 3.5, and more preferably 2.5 to 3.0. As the pH adjusting agent used at this time, a lithium hydroxide solution is preferably used, and for example, a lithium hydroxide solution obtained by a hydroxide process on the lithium-containing solution after the nickel extraction step described later can be used.

The extraction may employ a mixer-settler. In this case, first, the pH is adjusted by, for example, including a pH adjusting agent in the solvent, and then the metal-containing solution (aqueous phase) and the solvent (organic phase) are mixed in a mixer to form a mixed solution, which is stirred, for example, for 5 to 60 minutes. At this time, the predetermined target metal ions such as manganese ions in the metal-containing solution migrate to the solvent. The temperature during extraction is from ordinary temperature (approximately 15 to 25°C) to 60°C or lower, and it is preferably carried out at 35 to 45°C for reasons of an extraction rate, phase separation, and evaporation of the organic solvent. The mixed solution is then left to stand in a settler, and the aqueous phase and organic phase are separated based on a difference between their specific gravities. This provides an extracted solution that has separated the solvent. Extraction in steps other than the manganese extraction step can also be carried out in substantially the same manner.

At the time of extraction, it is desirable to carry out extraction by countercurrent type multistage extraction in which directions of the flow of the aqueous phase and the solvent used for each extraction are opposite to each other. By doing so, the extraction of cobalt ions, nickel ions, and lithium ions can be suppressed, while increasing the extraction rate of manganese ions. In the case of the countercurrent type multistage extraction, it is effective to set the equilibrium pH at the first stage of extraction to a value in the above range, and decrease the equilibrium pH at the time of extraction through successive stages.

In the metal-containing solution after the manganese extraction step, for example, the cobalt ion concentration may be 0 g/L to 50 g/L, and the nickel ion concentration may be 0 g/L to 50 g/L, and the lithium ion concentration may be 1 g/L to 30 g/L, and the sodium ion concentration may be 0.001 g/L to 0.1 g/L.

### (Cobalt Extraction Step)

For example, after the manganese extraction step, when the metal-containing solution contains cobalt ions, a cobalt extraction step can be performed to extract and separate cobalt ions from the metal-containing solution by solvent extraction.

It is preferable to use a solvent containing a phosphoric acid-based extracting agent, especially a phosphonate ester-based extracting agent, for the extraction of the cobalt ions. Particularly, 2-ethylhexyl 2-ethylhexylphosphonate (trade name: PC-88A, Ionquest 801) is preferable from the viewpoint of separation efficiency between nickel ions and cobalt ions. The extracting agent may be diluted with a hydrocarbon-based organic solvent so as to have a concentration of 10% by volume to 30% by volume and used as a solvent.

When extracting the cobalt ions, the equilibrium pH during extraction is preferably 5.0 to 6.0, and more preferably 5.0 to 5.5. If the pH is less than 5.0, the cobalt ions may not be sufficiently extracted into the solvent. As the pH adjusting agent at this time, a lithium hydroxide solution is preferably used, and for example, a lithium hydroxide solution obtained by the hydroxide process on the lithium-containing solution after the nickel extraction step described later can be used.

In the extraction of the cobalt ions as well, it is desirable to carry out the extraction by countercurrent type multistage extraction in which directions of flow of the aqueous phase and the solvent used for each extraction are opposite to each other. By doing so, it is possible to increase an extraction rate of cobalt ions while suppressing the extraction of nickel ions and lithium ions.

During the above extraction, not only cobalt ions but also nickel ions and lithium ions may be somewhat extracted into the solvent. In this case, if necessary, the solvent which extracted the cobalt ions may be subjected to one or more scrubbing processes using a scrubbing solution to remove nickel ions and lithium ions that may be contained in the solvent. The scrubbing solution can be, for example, a sulfuric acid solution having a pH of 3.5 to 5.5. The scrubbed solution may contain nickel ions and lithium ions. Therefore, part or all of the scrubbed solution is mixed with the metal-containing solution after the manganese extraction step and it is used as an extracting solution to carry out the cobalt extraction step. As a result, the nickel ions and/or lithium ions can be circulated or retained in the series of steps to concentrate them, without losing them. However, if the solvent used to extract the cobalt ions does not contain nickel ions or lithium ions, the scrubbing may not be performed.

The solvent containing the cobalt ions is then subjected to stripping. The stripping solution used for stripping may be any inorganic acid such as sulfuric acid, hydrochloric acid, and nitric acid, but can be appropriately determined according to the mixing step or crystallization step performed next. In many cases, sulfuric acid can be used as the stripping solution. Here, the stripping is carried out under pH conditions such that all the cobalt ions transfer from the solvent to the stripping solution as much as possible. Specifically, the pH is preferably in the range of 2.0 to 4.0, and more preferably in the range of 2.5 to 3.5.

### (Nickel Extraction Step)

When the metal-containing solution after extracting cobalt ions in the cobalt extraction step contains nickel ions, a nickel extraction step can be performed to extract nickel ions from the metal-containing solution by solvent extraction.

The solvent used in the nickel extraction step preferably contains a carboxylic acid-based extracting agent. Examples of the carboxylic acid-based extracting agent include neodecanoic acid and naphthenic acid. Among them, the neodecanoic acid (Versatic Acid 10 (VA-10) manufactured by Shell Chemicals) is preferred because of its ability to extract nickel ions. The extracting agent may be diluted with an aromatic, paraffinic, naphthenic, or other hydrocarbon-based organic solvent to a concentration of 10% to 30% by volume and used as a solvent.

The equilibrium pH during the extraction is preferably 6.0 to 8.0, and more preferably 6.8 to 7.2. As the pH adjusting agent used for pH adjustment at this time, a lithium hydroxide solution is preferably used, and for example, a lithium hydroxide solution obtained by the hydroxide process on the lithium-containing solution after the nickel extraction step described later can be used.

The extraction is preferably carried out in multiple stages using a countercurrent method in which the metal-containing solution and the solvent flow in opposite directions. By doing so, the extraction of lithium ions into the solvent can be suppressed, and the extraction rate of nickel ions can be increased. When performing multi-stage countercurrent extraction, it is effective, for example, to set the equilibrium pH during the first stage of extraction to a value within the above range, and then lower the equilibrium pH through successive stages of extraction.

The solvent that has contained the nickel ions by the extraction may optionally be subjected to one or more scrubbing processes using a scrubbing solution to remove lithium ions that may be contained in the solvent. The scrubbing solution can be, for example, a sulfuric acid solution having a pH of 5.0 to 6.0. Here, the resulting scrubbed solution may contain lithium ions. Therefore, it is preferable that a part or all of the scrubbed solution is mixed with the metal-containing solution after the cobalt extraction step, and it is used as the extracting solution to carry out the nickel extraction step. As a result, the lithium ions can be circulated or retained and concentrated in the series of steps without losing them. However, if the solvent containing the nickel ions does not contain lithium ions, the scrubbing may not be performed.

The solvent containing the nickel ions is then subjected to stripping using a stripping solution. The stripping solution used for stripping may be any inorganic acid such as sulfuric acid, hydrochloric acid, and nitric acid, but can be appropriately determined according to the mixing step or crystallization step performed next. In many cases, sulfuric acid can be used as the stripping solution. In the stripping, the pH is preferably in the range of 1.0 to 3.0, and more preferably 1.5 to 2.5. Although the O/A ratio and the number of times can be determined as needed, the O/A ratio is 5 to 1, and more preferably 4 to 2.

The extracted solution (a lithium sulfate solution or the like) in which the nickel ions have transferred to the solvent mainly contains lithium ions and may be added to the acidic leaching solution in the acid leaching step. This allows the lithium ions contained in the extracted solution to be circulated in a series of steps.

### (Mixing Step)

In the mixing step, the above cobalt-containing solution and/or nickel-containing solution is used to prepare a mixed solution such as a sulfuric acid solution containing cobalt ions, nickel ions, manganese ions and sodium ions. Specifically, it can be adjusted by mixing cobalt ions, nickel ions, and manganese ions in a solution containing a cobalt-containing solution and/or a nickel-containing solution, while adding a manganese source, cobalt source, nickel source and the like as needed.

As shown in Fig. 2, when the cobalt-containing solution and the nickel-containing solution are used, a manganese source may be added, but a cobalt source and/or nickel source may also be added separately. When using one of the cobalt-containing solution or nickel-containing solution, a cobalt source and/or nickel source can be added in addition to the manganese source. When preparing the mixed solution, the cobalt-containing solution and/or the nickel-containing solution obtained from lithium ion battery waste as described above may be used.

The amounts of the cobalt-containing solution and/or the nickel-containing solution, and the manganese source to be added can be determined according to the desired composition of the precursor and the cathode active material to be produced. For example, the amount of each solution or the like to be added may be adjusted so that the molar ratio of cobalt ions, nickel ions, and manganese ions in the mixed solution is, for example, 50:20:30.

The cobalt-containing solution and/or the nickel-containing solution contains sodium ions derived from, for example, sodium contained in the lithium ion battery waste or sodium hydroxide, a pH adjusting agent added in the previous step. In this embodiment, the cobalt-containing solution and nickel-containing solution are used in the mixing step without undergoing crystallization of the cobalt salt or nickel salt, so the mixed solution contains sodium ions brought in from the cobalt-containing solution and the nickel-containing solution. The sodium ion concentration of the mixed solution may be, for example, 1 mg/L to 500 mg/L.

As the manganese source, a manganese-containing solution or manganese compound or the like (i.e., a manganese source derived from lithium ion battery waste) that can be recovered by extracting manganese ions in the manganese extraction step described above can also be used. However, the manganese-containing solution or manganese compound obtained after the manganese extraction step may contain a relatively large amount of aluminum. Therefore, from the perspective of further reducing impurities such as aluminum in the precursor, it is desirable to prepare the mixed solution in the mixing step using a manganese source that is not derived from lithium ion battery waste.

### (Coprecipitation Step)

In the coprecipitation step, a pH adjusting agent is added to the mixed solution obtained in the mixing step to adjust the pH, and a complexing agent is added. This causes a coprecipitation reaction, which precipitates the cobalt ions, nickel ions and manganese ions in the mixed solution to obtain a composite salt containing cobalt, nickel and manganese. Typically, the composite salt may be a composite hydroxide containing cobalt, nickel and manganese.

The coprecipitation reaction can be performed under conditions often employed in the production of precursors of cathode active materials. More specifically, for example, the liquid temperature of the mixed solution can be set at 50°C to 70°C and the pH of the mixed solution can be set at 10.0 to 11.0 by adding the pH adjusting agent. At this time, the mixed solution may be stirred at a speed of 500 rpm to 1000 rpm. Aqueous ammonia, an aqueous ammonium sulfate solution, an aqueous ammonium chloride solution, and the like, can be used as the complexing agent.

Here, sodium hydroxide and/or sodium carbonate is used as the pH adjusting agent. Thereby, the impurities introduced due to the use of the pH adjusting agent will be the same sodium as the impurities brought in from the cobalt-containing solution and/or nickel-containing solution and included in the mixed solution, as described above. Such sodium is mixed into the composite salt produced in the coprecipitation reaction, but it can be effectively removed in the washing step described below. If a pH adjusting agent other than sodium hydroxide and sodium carbonate is used, the addition of such pH adjusting agent will introduce other impurities than sodium into the composite salt, and even if sodium is removed, such other impurities can remain in the precursor.

### (Washing Step)

The composite salt obtained in the mixing step is subjected to washing in the washing step. This washing is primarily intended to remove impurities such as sodium from the composite salt. The precursor can be produced through the washing step.

The composite salt produced in the coprecipitation step tend to have sodium primarily attached to the surfaces of their particles. Hence, washing the composite salt in the washing step will wash away the sodium attached to the surfaces of its particles, resulting in a precursor with a sufficiently low sodium content.

In the washing, for example, the composite salt can be put into a washing solution such as pure water to form a slurry, and after performing operations such as stirring as necessary, the composite salt can be extracted by solid-liquid separation. Such washing may be repeated multiple times, not just once.

The precursor obtained after the washing step may have a sodium content of, for example, 100 mass ppm or less, and even 30 mass ppm or less. As mentioned earlier, the use of sodium hydroxide as a pH adjusting agent in the coprecipitation step ensures that the precursor also has sufficiently reduced contents of other impurities.

### (Cobalt Crystallization Step and Nickel Crystallization Step)

The cobalt-containing solution obtained in the cobalt extraction step and the nickel-containing solution obtained in the nickel extraction step are basically subjected to the mixing step as described above and used in the production of precursors. On the other hand, the cobalt-containing solution and the nickel-containing solution do not necessarily have to be used in their entirety in the production of precursors. A portion of the cobalt-containing solution and/or the nickel-containing solution can be subjected to the mixing step, and for at least a portion of the remainder, a cobalt crystallization step and/or a nickel crystallization step can be performed to be subjected to the crystallization process. The resulting cobalt salt and/or nickel salt can be used in a variety of applications, including sales.

In the cobalt crystallization step, the cobalt-containing solution (stripped solution) obtained by stripping in the cobalt extraction step described above is heated to, for example, 40°C to 120°C and concentrated. As a result, the cobalt ions are crystallized to obtain a cobalt salt such as cobalt sulfate. The cobalt salt thus obtained may have a nickel content of 5 mass ppm or less.

Here, the solution after crystallization in the cobalt crystallization step may contain uncrystallized cobalt ions and lithium ions. It is desirable to mix such a crystallized solution with the cobalt-containing solution before the crystallization step and subject it to the crystallization step again, use it to adjust the cobalt ion concentration of the scrubbing solution used for the solvent that has extracted the cobalt ions in the cobalt extraction step, or mix it with the metal-containing solution after the manganese extraction step and subject it to the cobalt extraction step. By doing so, cobalt ions and lithium ions can be circulated or retained and concentrated in the series of steps without losing them.

Also, in the nickel crystallization step, when a stripped solution such as a nickel sulfate solution is obtained by stripping, the nickel-containing solution as the stripped solution obtained by stripping in the nickel extraction step described above or, if necessary, the nickel-containing solution obtained by electrolyzing and dissolving the stripped solution is heated to 40°C to 120°C and concentrated. As a result, the nickel ions are crystallized to obtain a nickel salt such as nickel sulfate.

Here, the crystallized solution in the nickel crystallization step may contain uncrystallized nickel ions and lithium ions. It is desirable to mix such a crystallized solution with the nickel-containing solution before the crystallization step and subject it to the crystallization step again, use it to adjust the nickel ion concentration of the scrubbing solution for the solvent containing nickel ions, or mix it with the metal-containing solution after the cobalt extraction step and subject it to the nickel extraction step. By doing so, nickel ions and lithium ions can be circulated or retained and concentrated in the series of steps without losing them.

If the solution is returned to the previous step as described above and lithium ions are circulated within the series of steps, the sodium ions can also be concentrated accordingly. The embodiment described here is particularly effective when sodium ions are circulated together with lithium ions in a series of steps as described above, because the precursor can be produced while effectively removing sodium ions in the washing step.

### (Lithium Salt Preparation Step)

In the embodiment of the method for producing a cathode active material, to produce the cathode active material using the above precursor, a lithium salt preparation step can be performed to obtain lithium salt from at least a portion of the lithium-containing solution obtained after the cobalt extraction step and/or the nickel extraction step (see Fig. 1). Lithium salts include, for example, lithium carbonate and lithium hydroxide.

When producing lithium carbonate, lithium carbonate can be precipitated by adding a carbonate such as sodium carbonate to the lithium-containing solution or blowing a carbon dioxide gas into it to perform a carbonation process. From the viewpoint of preventing an increase in impurities, the blowing of the carbon dioxide gas is preferable. After adding the carbonate salt or blowing the carbon dioxide gas, for example, the liquid temperature can be maintained in the range of 50°C to 90°C, and stirred as necessary, and this temperature can be maintained for 0.5 to 2 hours.

The lithium carbonate thus obtained may be subjected to purification such as washing, dissolving, and decarbonation, as needed, in order to increase its purity.

When producing lithium hydroxide, after performing a hydroxide process on the lithium-containing solution to obtain a lithium hydroxide solution, lithium hydroxide can be precipitated by separation by crystallization. As the hydroxide process, for example, there are a carbonation and chemical conversion method that uses calcium hydroxide after preparing lithium carbonate, a chemical conversion method that uses barium hydroxide, an electrodialysis method, and the like.

For the carbonation and chemical conversion method, first, a lithium carbonate solution is obtained by adding a carbonate to or blowing a carbon dioxide gas into a lithium-containing solution. Subsequently, in a so-called chemical conversion method, calcium hydroxide can be added to the lithium carbonate solution to generate the lithium hydroxide solution under the reaction formula: Li₂CO₃ + Ca(OH)₂ → 2LiOH + CaCO₃. Calcium that may remain in the solution can be removed with a cation exchange resin, a chelate resin, or the like.

When barium hydroxide is used, barium hydroxide can be added to the lithium-containing solution to obtain the lithium hydroxide solution based on the reaction: Li₂SO₄ + Ba(OH)₂ → 2LiOH + BaSO₄. At this time, barium that can be dissolved in the solution can be separated and removed using a cation exchange resin, a chelate resin, or the like.

For the electrodialysis, in a bipolar membrane electrodialysis device, the lithium-containing solution is introduced into a desalting chamber between an anion exchange membrane and a cation exchange membrane, and pure water is introduced into each of an acid chamber between a bipolar membrane and an anion exchange membrane and an alkaline chamber between a cation exchange membrane and a bipolar membrane, and a voltage is applied between the electrodes. Then, the lithium ions in the metal-containing solution in the desalting chamber move to the alkaline chamber where the bipolar membrane decomposes the pure water into hydroxide ions to obtain a lithium hydroxide solution. It should be noted that anions of an inorganic acid such as sulfates in the metal-containing solution in the desalting chamber pass through the anion exchange membrane and move to the acid chamber.

For the separation by crystallization of lithium hydroxide, crystallizing operations such as heating concentration or vacuum distillation can be performed on the above lithium hydroxide solution. For the heat concentration, a higher temperature during crystallizing leads to faster progression of the process, which is preferable. However, the temperature of the crystallized product after separation by crystallization can be a temperature of less than 60°C at which water of crystallization is not released. This is because anhydrous lithium hydroxide that has released the water of crystallization is deliquescent and thus difficult to be handled. Subsequently, a pulverization process or the like can be performed in order to adjust the lithium hydroxide to required physical properties.

### (Calcining Step)

In the calcining step, the precursor obtained in the coprecipitation step described above is mixed with a lithium salt such as lithium carbonate or lithium hydroxide obtained in the lithium salt preparation step described above as a lithium source by kneading or the like, and the mixture is heated and calcined.

Here, for example, the mixture can be maintained and heated at a temperature of 450°C to 900°C for 8 hours to 12 hours in an air atmosphere. When lithium carbonate is used as the lithium salt, heating at 720°C to 780°C for 2 hours is followed by heating at 860°C to 900°C for 8 hours, which may take about 24 hours including the time for increasing and decreasing the temperature. When lithium hydroxide is used as the lithium salt, heating at 450°C to 550°C for 8 hours is followed by heating at 860°C to 900°C for 4 hours, which may be about 24 hours including the time for increasing and decreasing the temperature.

After the calcining step, crushing or other processing is performed as necessary to produce cathode active materials such as a ternary system of Li[NiₐCo_{b}Mn_{(1-a-b)}]O₂ (NCM) or Li[NiₐCo_{b}Al_{(1-a-b)}]O₂ (NCA), or a quaternary system of Li[NiₐCo_{b}Mn_{c}Al_{(1-a-b-c)}]O₂ (NCMA).

### [Examples]

Next, the methods for producing the precursor and cathode active material described above were experimentally carried out to produce the precursor and cathode active material, as described below. However, descriptions herein are merely for illustration, and are not intended to be limited thereto.

### (Production Method)

In Examples, as shown in Fig. 1, the metal-containing solution obtained by leaching battery powder from lithium ion battery waste with an acid was subjected to neutralization, manganese extraction, cobalt extraction, and nickel extraction in this order to obtain a cobalt sulfate solution as the cobalt-containing solution and a nickel sulfate solution as the nickel-containing solution, respectively.

Then, as shown in Fig. 2, a mixed solution (sulfuric acid-based raw material) was prepared by mixing the cobalt sulfate solution and the nickel sulfate solution (recycled solution) while adding a manganese source, to which sodium hydroxide as a pH adjusting agent and aqueous ammonia as a complexing agent were added to cause coprecipitation reaction to precipitate a composite hydroxide containing cobalt, nickel, and manganese. In the coprecipitation reaction, the liquid temperature was set to 60°C, pH to 10.2, and stirring at 1000 rpm was performed. The composite hydroxide was then washed with pure water to produce the precursor.

The precursor was then mixed with lithium carbonate obtained in the lithium salt preparation in Fig. 1, and the mixture was heated at 720°C to 900°C for 10 hours in an air atmosphere. The cathode active material was thus produced.

In Comparative Examples, the cobalt sulfate solution and the nickel sulfate solution obtained in the cobalt extraction and nickel extraction in Fig. 1, respectively, were crystallized to obtain cobalt sulfate and nickel sulfate (recycled sulfate), as shown in Figs. 4 and 5, respectively. The cobalt sulfate and nickel sulfate were dissolved in pure water, and a manganese source was added to prepare a mixed solution (sulfuric acid-based raw material). Thereafter, the precursor and cathode active material were produced in the same manner as in Examples.

### (Evaluation)

In Examples, separation by crystallization and re-dissolution after extraction of cobalt and nickel were not performed as in Comparative Examples, so the steps can be simpler than in Comparative Examples.

Table 1 shows the content of impurities in the mixed solution (sulfuric acid-based raw material) prepared from the recycled solution according to Example, the mixed solution (sulfuric acid-based raw material) prepared from recycled sulfate in Comparative Example, and the precursor and cathode active material obtained in the Example and Comparative Example. Impurity components in the mixed solution were measured by ICP-MS. For the precursor and the cathode active material, the impurity components (other than K) and K were measured by ICP-MS and by atomic absorption spectroscopy, respectively. Here, the samples were dissolved in aqua regia as preprocessing.

**[Table 1]**

| | | Raw Materia | Na (mg/L) | K (mg/L) | Ca (mg/L) | Mg (mg/L) | Cr (mg/L) | Fe (mg/L) | Cu (mg/L) | Zn (mg/L) | Pb (mg/L) | Al (mg/L) | Si (ppm) | S (ppm) |
|---|---|---|---|---|---|---|---|---|---|---|---|---|---|---|
| Comp. | Sulfuric Acid Raw material | Recycled Sulfate | 6.5 | 7.4 | 3.7 | 7.3 | <1 | <1 | <1 | <1 | <1 | <1 | - | - |
| Ex. | | Recycled Solution | 7 | 73 | 6 | 71 | <1 | <1 | <1 | <1 | <1 | <1 | - | - |
| Comp. | Precursor | Recycled Sulfate | 48 | <10 | 24 | 76 | 0.8 | 15 | <0.1 | <0.1 | <0.1 | <0.1 | 27 | 1,500 |
| Ex. | | Recycled Solution | 34 | <10 | 29 | 91 | <0.1 | 3.4 | <0.1 | <0.1 | <0.1 | 0.5 | 29 | 1,200 |
| Comp | Cathode Active Material | Recycled Sulfate | 78 | 30 | 39 | 68 | 0.9 | 10 | <0.1 | <0.1 | <0.1 | 1.2 | 27 | 1,300 |
| Ex. | | Recycled Solution | 55 | 30 | 56 | 74 | <0.1 | 2.5 | <0.1 | <0.1 | <0.1 | 1.8 | 31 | 1,200 |

Table 1 shows that the precursors and cathode active materials according to Examples had similar or lower sodium content than those in Comparative Examples. This is presumably due to the effective removal of sodium by washing after coprecipitation.

The average particle size (D50), tapped density (TAP) and BET specific surface area (BET) of each precursor obtained in Examples and Comparative Examples were also confirmed. The average particle size was measured by the laser diffraction and scattering method. The tap density was measured according to JIS Z2512:2012. The BET specific surface area was measured by the BET method. These results are shown in Table 2. Table 2 also includes SEM images of each precursor.

**[Table 2]**

| Sulfuric Acid Raw Material | | Comp. Recycled Sulfate | Ex. Recycled Solution |
|---|---|---|---|
| Precursor Properties | D50µm (target 10) | 10.3 | 9.9 |
| | TAP g/CC | 2.3 | 2.3 |
| | BET m²/g | 4.4 | 4.7 |
| Appearance SEM Image | ×10,000 | 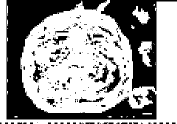 | 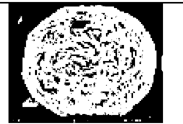 |
| | ×1,000 | 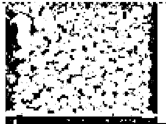 | 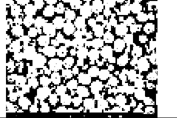 |

Table 2 shows that the precursors according to Examples has a sufficiently small particle size and are comparable to the precursors according to Comparative Examples, including the tapped density and the BET specific surface area.

From the above, it was found that according to the production method described above, a precursor with reduced impurity content can be produced from lithium ion battery waste, even though the steps are simplified.

## Claims

1. A method for producing a precursor of a lithium ion battery cathode active material from lithium ion battery waste, the method comprising:
an acid leaching step of leaching metals in battery powder obtained from lithium ion battery waste with an acid to obtain a metal-containing solution containing cobalt ions and/or nickel ions;
a cobalt extraction step of extracting cobalt ions from the metal-containing solution containing cobalt ions by solvent extraction to obtain a cobalt-containing solution containing sodium ions, and/or a nickel extraction step of extracting nickel ions from the metal-containing solution containing nickel ions by solvent extraction to obtain a nickel-containing solution containing sodium ions;
a mixing step of preparing a mixed solution containing cobalt ions and/or nickel ions and sodium ions using the cobalt-containing solution and/or the nickel-containing solution;
a coprecipitation step of using sodium hydroxide and/or sodium carbonate as a pH adjusting agent and adding a complexing agent to the mixed solution to obtain a composite salt containing cobalt and/or nickel by coprecipitation reaction; and
a washing step of washing the composite salt to obtain a precursor.

2. The method for producing a precursor of a lithium ion battery cathode active material according to claim 1, wherein the mixed solution comprises manganese ions and the composite salt comprises manganese, and wherein in the mixing step, a manganese source that is not derived from lithium ion battery waste is added to prepare the mixed solution.

3. The method for producing a precursor of a lithium ion battery cathode active material according to claim 1, wherein a portion of the cobalt-containing solution and/or the nickel-containing solution is subjected to the mixing step, and
wherein the method comprises a cobalt crystallization step of performing a crystallization process on at least a portion of the remainder of the cobalt-containing solution to obtain a cobalt salt, and/or a nickel crystallization step of performing a crystallization process on at least a portion of the remainder of the nickel-containing solution to obtain a nickel salt.

4. A method for producing a lithium ion battery cathode active material using a precursor produced by the method for producing a precursor of a lithium ion battery cathode active material according to claim 1 or 2, the method comprising:
a lithium salt preparation step of obtaining a lithium salt from at least a portion of a lithium-containing solution obtained after the cobalt extraction step and/or the nickel extraction step; and
a calcining step of mixing the precursor obtained in the coprecipitation step with the lithium salt obtained in the lithium salt preparation step, and heating and calcining the resulting mixture.

5. The method for producing a lithium ion battery cathode active material according to claim 4, wherein the lithium salt is lithium carbonate or lithium hydroxide.
